# EUROPEAN PATENT APPLICATION

(11) **EP 4 818 415 A1**
(43) Date of publication of application: **07.10.2026**
(21) Application number: 26161645.2
(22) Date of filing: 02.03.2026
(51) Int. Cl.: E02F 9/12, B25J 9/10, E02F 9/22

(54) **PROCESSING DEVICE, WORK MACHINE, METHOD OF ESTIMATING BACKLASH AMOUNT, AND PROGRAM FOR ESTIMATING BACKLASH AMOUNT**

(30) Priority: 03.04.2025 JP 2025061850
(71) Applicant: NABTESCO CORPORATION, Chiyoda-ku Tokyo 102-0093 (JP)
(72) Inventor: Shinozaki, Takuya, Tokyo, 102-0093 (JP); Hashimoto, Yohei, Tokyo, 102-0093 (JP)
(74) Representative: Grünecker Patent- und Rechtsanwälte PartG mbB

(57) **Abstract**

A processing device configured to execute: a first acquisition process of acquiring an input phase that is a rotational phase of a rotation input portion of a speed reducer, the rotation input portion rotating based on torque input to the speed reducer; a second acquisition process of acquiring an output phase that is a rotational phase of a rotation output portion of the speed reducer, the output portion rotating based on torque from the rotation input portion; a third acquisition process of acquiring an estimated phase based on a reduction ratio and the input phase; and a fourth acquisition process of acquiring a phase difference that is a difference between the output phase and the estimated phase; and an output process of outputting a backlash amount based on the phase difference.

## Description

### CROSS-REFERENCE TO RELATED APPLICATIONS

This application is based on and claims the benefit of priority from Japanese Patent Application Serial No. 2025-061850 (filed on April 3, 2025), the contents of which are hereby incorporated by reference in its entirety.

### TECHNICAL FIELD

The present disclosure relates to a processing device, a work machine, a method of estimating backlash amount, and a program for estimating a backlash amount.

### BACKGROUND

Japanese Patent Application Publication No. 2020-110877 ("the '877 Publication") discloses a robot test method for estimating a failure in a transmission device of a robot's drive system. Examples of failures in the transmission device of the robot's drive system include an increase in a backlash amount of a speed reducer.

In the test method of the '877 Publication, a backlash period during which an output torque is substantially zero is acquired. Furthermore, in the test method of the '877 Publication, a torque difference between an actual drive torque and the output torque is acquired. Subsequently, failure diagnosis is performed by comparing the backlash period and torque difference with profile data.

In the test method of the '877 Publication, profile data corresponding to motor characteristics must be prepared in advance. Creating such profile data for each motor characteristic is time-consuming.

### SUMMARY

A processing device according to one aspect of the present disclosure configured to execute: a first acquisition process of acquiring an input phase, the input phase being a rotational phase of a rotation input portion of a speed reducer, the rotation input portion rotating based on torque input to the speed reducer; a second acquisition process of acquiring an output phase, the output phase being a rotational phase of a rotation output portion of the speed reducer, the output portion rotating based on torque from the rotation input portion; a third acquisition process of acquiring an estimated phase based on a reduction ratio and either one of the input phase or the output phase, the reduction ratio being a ratio of a rotational speed of the rotation input portion to a rotational speed of the rotation output portion; a fourth acquisition process of acquiring a phase difference, the phase difference being a difference between the other of the input phase or the output phase and the estimated phase; and an output process of outputting a backlash amount based on the phase difference.

In the above configuration, the backlash amount is output based on the input phase, the output phase, and the reduction ratio of the speed reducer. Therefore, it is possible to know a change in the backlash amount regardless of the motor characteristics of the motor that inputs torque to the speed reducer.

In the processing device, in the third acquisition process, the estimated phase may be acquired as a product of an amount of change in the input phase per unit time and the reduction ratio. In the fourth acquisition process, the phase difference may be acquired as a difference between an amount of change in the output phase per same unit time and the estimated phase.

In the processing device, in the output process, the backlash amount based on the phase difference may be output when the backlash amount is greater than a predetermined threshold. In the processing device, the rotation input portion may be an input shaft of the speed reducer to which torque from a motor is input, and the rotation output portion may be an output shaft of the speed reducer that outputs torque of the speed reducer to a driven portion.

The processing device may correct backlash amount based on a weight parameter related to weight of the driven portion. Another aspect of the disclosure provides a work machine that includes: a motor; a speed reducer to which torque from the motor is input; a driven portion to which torque decelerated by the speed reducer is input; and the above processing device.

The driven portion may be in any one of: a slewing bearing rotatably coupling a lower structure and an upper structure that form a vehicle body of the work machine; a swing bracket rotatably coupled to the vehicle body; a boom rotatably coupled to the swing bracket; an arm rotatably coupled to the boom; or an attachment rotatably coupled to the arm.

Yet another aspect of the disclosure provides a method of estimating a backlash amount. The method includes: acquiring, by a computer, an input phase, the input phase being a rotational phase of a rotation input portion of a speed reducer, the rotation input portion rotating based on torque input to the speed reducer; acquiring, by the computer, an output phase, the output phase being a rotational phase of a rotation output portion of the speed reducer, the output portion rotating based on torque from the rotation input portion; acquiring, by the computer, an estimated phase based on a reduction ratio and either one of the input phase or the output phase, the reduction ratio being a ratio of a rotational speed of the rotation input portion to a rotational speed of the rotation output portion; acquiring, by the computer, a phase difference, the phase difference being a difference between the other of the input phase or the output phase and the estimated phase; and outputting, by the computer, a backlash amount based on the phase difference.

In the above configuration, the backlash amount is output based on the input phase, the output phase, and the reduction ratio of the speed reducer. Thus, it is possible to know a change in the backlash amount regardless of the motor characteristics of the motor that inputs torque to the speed reducer.

Yet still another aspect of the disclosure provides a program for estimating a backlash amount. The program causes a computer to execute: a first step of acquiring an input phase, the input phase being a rotational phase of a rotation input portion of a speed reducer, the rotation input portion rotating based on torque input to the speed reducer; a second step of acquiring an output phase, the output phase being a rotational phase of a rotation output portion of the speed reducer, the output portion rotating based on torque from the rotational input portion; a third step of acquiring an estimated phase based on a reduction ratio and either one of the input phase or the output phase, the reduction ratio being a ratio of a rotational speed of the rotation input portion to a rotational speed of the rotation output portion; a fourth step of acquiring a phase difference, the phase difference being a difference between the other of the input phase or the output phase and the estimated phase; and a fifth step of outputting a backlash amount based on the phase difference.

In the above configuration, the backlash amount is output based on the input phase, the output phase, and the reduction ratio of the speed reducer. Thus, it is possible to know a change in the backlash amount regardless of the motor characteristics of the motor that inputs torque to the speed reducer.

### ADVANTAGEOUS EFFECTS

With the above technical idea, it is possible to know a change in the backlash amount regardless of the motor characteristics.

### BRIEF DESCRIPTION OF THE DRAWINGS

Fig. 1 is a first schematic view of an excavator, which is a construction machine as an example of a work machine.
Fig. 2 is a second schematic view of the excavator of Fig. 1.
Fig. 3 is a block diagram illustrating a torque transmission path in the excavator of Fig. 1.
Fig. 4 is a block diagram illustrating a configuration for estimating the amount of backlash of a speed reducer in the work machine according to a first embodiment.
Fig. 5 is a flowchart illustrating a process performed by a processing device according to the first embodiment.
Fig. 6 is a flowchart illustrating a process performed by a processing device according to a second embodiment.
Fig. 7 is a schematic view of a work machine according to Configuration Example 1.
Fig. 8 is a schematic view of a conversion device in Fig. 7.
Fig. 9 is a schematic view of a work machine according to Configuration Example 2.
Fig. 10 is a schematic view of a winch mechanism in Fig. 9.

### DESCRIPTION OF THE EMBODIMENTS

### <First Embodiment>

Embodiments of a work machine are described below. The construction machine in the following description is an example of the work machine. For simplicity and clarity of the description, the elements shown in the drawings are not necessarily drawn to a fixed scale.

### <Overall Configuration>

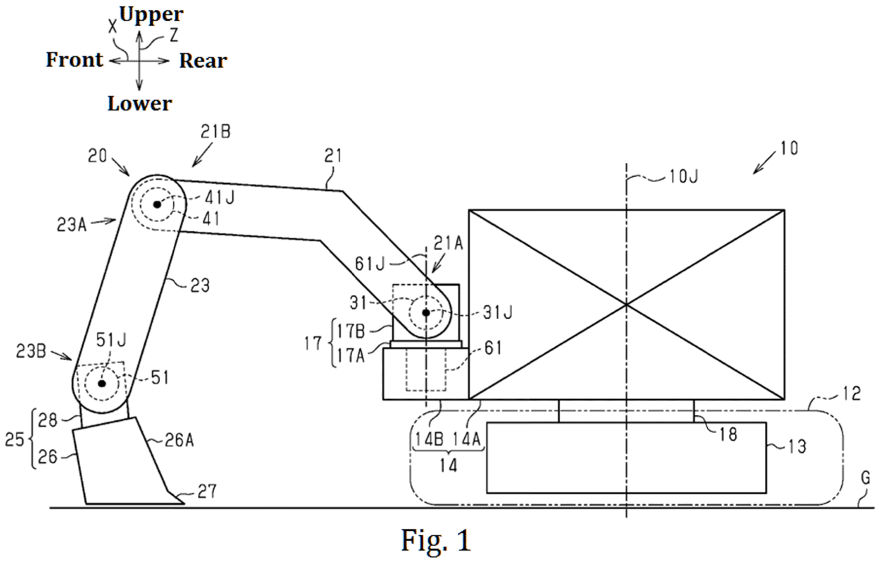

As shown in Fig. 1, an excavator 10, which is the work machine or construction machine, includes a lower structure 13 and an upper structure 14. The upper structure 14 is located on the opposite side to the ground surface G with respect to the lower structure 13. In the embodiment, when viewed from the lower structure 13, the upper structure 14 is disposed in the upper direction, and the opposite direction is the lower direction. A specific one of the directions orthogonal to the upper direction is the front direction, and the opposite direction is the rear direction. Furthermore, the direction that is orthogonal to both of the upper and front directions faces the left and right directions, which are opposite to each other. The front and rear directions may be collectively referred to as X direction. The left and right directions may be collectively referred to as Y direction. The upper and lower directions may be collectively referred to as Z direction.

The excavator 10 includes the lower structure 13 and the upper structure 14. The lower structure 13 may have a rectangular parallelepiped shape, for example. The upper structure 14 includes a housing main portion 14A and a housing front portion 14B. The housing main portion 14A has, for example, a rectangular parallelepiped shape. An interior of the housing main portion 14A is a hollow accommodation space. The accommodation space accommodates various types of equipment for operating the excavator 10. The housing front portion 14B is located on a front side of the housing main portion 14A. The housing front portion 14B is located substantially at a center of the housing main portion 14A in the Y-direction. The housing front portion 14B is fixed to a front surface of the housing main portion 14A. The housing front portion 14B has, for example, a rectangular parallelepiped shape smaller than the housing main portion 14A. An interior of the housing front portion 14B is hollow. Although not illustrated, the upper structure 14 includes a cabin in which an operator boards. The cabin is fixed to the housing main portion 14A to form a single body. Note that the upper structure 14 may be referred to as an upper slewing body.

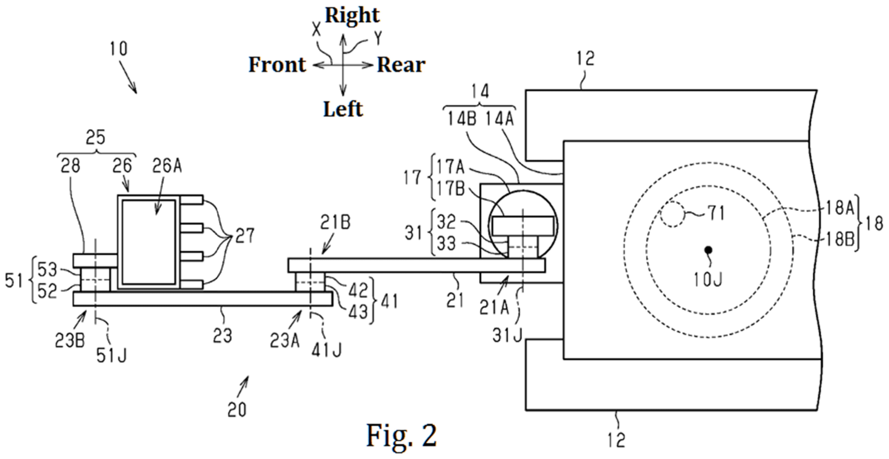

As shown in Fig. 1, the excavator 10 includes a slewing bearing 18. The slewing bearing 18 is interposed between the lower structure 13 and the upper structure 14. In Fig. 1, a vertical width of the slewing bearing 18 in the Z-direction is exaggerated for clarity. As shown in Fig. 2, the slewing bearing 18 has an annular inner race 18A, an annular outer race 18B, and a plurality of rolling elements. In Fig. 2, illustration of the rolling elements is omitted. The outer diameter of the inner race 18A is smaller than the inner diameter of the outer race 18B. A slewing axis 10J, which is a center axis of the inner ring 18A, substantially coincides with a center axis of the outer ring 18B. The swing axis 10J extends parallel to the vertical direction of the vehicle body, i.e., the Z-direction. As shown in Fig. 1, the slewing axis 10J vertically passes through both the upper structure 14 and the lower structure 13. The rolling elements are interposed between the inner race 18A and the outer race 18B. The plurality of rolling elements support the inner race 18A and the outer race 18B such that they can rotate relative to each other. The outer race 18B is thus rotatable about the slewing axis 10J relative to the inner race 18A. The inner race 18A is fixed to the lower structure 13. The outer race 18B is fixedly attached to the housing main portion 14A of the upper structure 14. Accordingly, the upper structure 14 is rotatable about the slewing axis 10J relative to the lower structure 13. In other words, the upper structure 14 rotates relative to the lower structure 13.

As shown in Figs. 1 and 2, the excavator 10 includes a pair of traveling units 12. The pair of traveling units 12 are provided at the left and right sides of the lower structure 13. Both of the pair of traveling units 12 are connected to the lower structure 13. Each of the pair of traveling units 12 includes a crawler for traveling, an operation mechanism for causing the crawler to rotate, and the like. The crawler is an endless belt. The crawler is open on both left and right sides. A lower surface of the crawler is in contact with the ground G. The excavator 10 travels as the crawler rotates. Note that the traveling units 12 and the lower structure 13 may be collectively referred to as a lower traveling body.

As shown in Figs. 1 and 2, the excavator 10 includes a swing bracket 17. The swing bracket 17 is located on a front side with respect to the housing main portion 14A of the upper structure 14. The swing bracket 17 includes a first swing wall 17A and a second swing wall 17B. The first swing wall 17A is disposed on an upper surface of the housing front portion 14B of the upper structure 14. The first swing wall 17A is shaped like a circular plate, for example. The first swing wall 17A is coupled to the housing front portion 14B. The first swing wall 17A is rotatable relative to the housing front portion 14B about a swing axis 61J. The swing axis 61J is substantially parallel to the slewing axis 10J. Details of the swing axis 61J will be described later. The second swing wall 17B protrudes upward from an upper surface of the first swing wall 17A. The second swing wall 17B is, for example, rectangular plate-shaped.

### <Work Attachment>

As shown in Fig. 1, the excavator 10 includes a work attachment 20. The work attachment 20 includes a boom 21, an arm 23, and a bucket 25.

As shown in Fig. 1, the boom 21 is disposed on the front side with respect to the housing main portion 14A of the upper structure 14. The boom 21 is shaped like an elongated plate or column. As shown in Fig. 2, a first end 21A of the boom 21 in a longitudinal direction of the boom 21 is aligned with the second swing wall 17B of the swing bracket 17 in a direction along a first axis 31J. The first axis 31J is an imaginary axis substantially orthogonal to the swing axis 61J. Details of the first axis 31J will be described later. The first end 21A of the boom 21 is rotatably coupled to the second swing wall 17B.

As shown in Fig. 1, the arm 23 extends from a second end 21B of the boom 21 opposite to the first end 21A. The arm 23 has an elongated plate-like or columnar shape. As shown in Fig. 2, a first end 23A in a longitudinal direction of the arm 23 is aligned with the second end 21B of the boom 21 in a direction along a second axis 41J. The second axis 41J is an imaginary axis substantially parallel to the first axis 31J. Details of the second axis 41J will be described later. The first end 23A of the arm 23 is rotatably connected to the second end 21B of the boom 21.

As shown in Fig. 1, the bucket 25 is disposed in the vicinity of a second end 23B of the arm 23 opposite to the first end 23A. The bucket 25 includes a bucket body 26, a plurality of teeth 27, and a bucket coupling wall 28. The bucket body 26 is box-shaped. Specifically, as shown in Fig. 2, the bucket body 26 has an opening 26A. The teeth 27 project from one side of the rectangular opening edge of the bucket body 26. The bucket coupling wall 28 projects from a portion of an outer wall of the bucket body 26 situated on an opposite side to the teeth 27 across the opening 26A. As shown in Fig. 2, the bucket coupling wall 28 is aligned with the second end 23B of the arm 23 in a direction along a third axis 51J. The third axis 51J is an imaginary axis substantially parallel to both the first axis 31J and the second axis 41J. Details of the third axis 51J will be described later. The bucket coupling wall 28 is rotatably connected to the second end 23B of the arm 23.

### <Actuator>

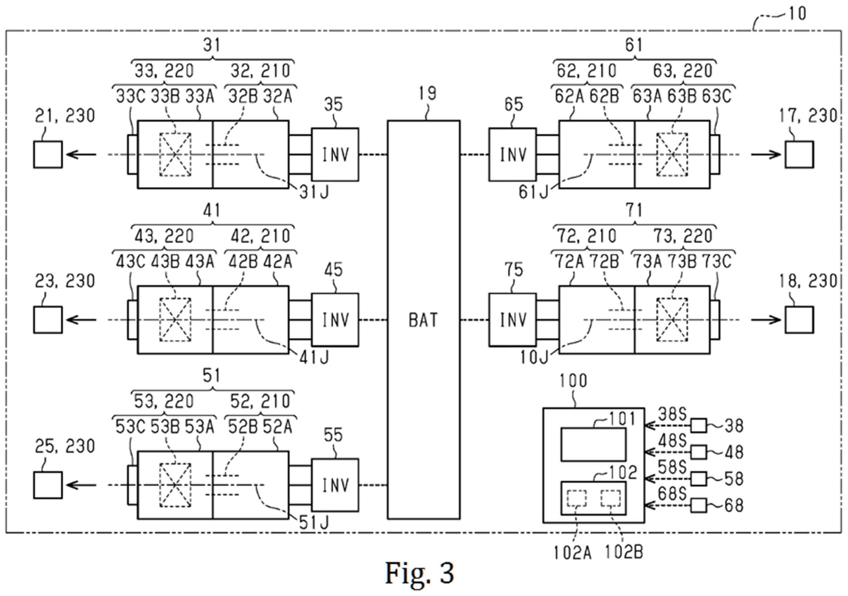

As shown in Fig. 3, the excavator 10 includes a first actuator 31, a second actuator 41, and a third actuator 51. Further, the excavator 10 includes a first inverter 35, a second inverter 45, a third inverter 55, and a battery 19. Although not shown, the first inverter 35, the second inverter 45, the third inverter 55, and the battery source 19 are accommodated in the housing main portion 14A of the upper structure 14.

As shown in Fig. 2, the first actuator 31 is disposed between the second swing wall 17B of the swing bracket 17 and the first end 21A of the boom 21. As shown in Fig. 3, the first actuator 31 includes a first electric motor 32 and a first speed reducer 33. The first electric motor 32 is a three-phase AC motor. The first electric motor 32 is electrically connected to the battery 19 via the first inverter 35. The first electric motor 32 includes a housing 32A and an output shaft 32B rotatable relative to the housing 32A. The housing 32A is attached to the second swing wall 17B of the swing bracket 17. The output shaft 32B projects from the inside to the outside of the housing 32A. The output shaft 32B is shaped like a circular column. The output shaft 32B is rotatable relative to the housing 32A about the first axis 31J, which is a center axis of the drive shaft 32B. That is, the output shaft 32B outputs torque about the first axis 31J. The output shaft 32B is rotatable in both forward and reverse directions about the first axis 31J. As shown in Fig. 2, the first axis 31J passes through both the second swing wall 17B of the swing bracket 17 and the first end 21A of the boom 21.

As shown in Figs. 3, the first speed reducer 33 includes a housing 33A, a speed reduction mechanism 33B, and an output member 33C. The housing 33A is attached to the housing 32A of the first electric motor 32. The speed reduction mechanism 33B is disposed inside the housing 33A. Torque from the output shaft 32B of the first electric motor 32 is inputted to the speed reduction mechanism 33B. The speed reduction mechanism 33B is configured to amplify the torque from the first electric motor 32 at a predetermined ratio and output the amplified torque to the output member 33C. The speed reduction mechanism 33B may be, for example, of an eccentric oscillating gear type or a planetary gear type. The output member 33C has a circular column shape. A center axis of the output member 33C substantially coincides with the first axis 31J. The output member 33C is rotatable relative to the housing 33A. The output member 33C rotates about the first axis 31J by rotation of the output shaft 32B of the first electric motor 32. The output member 33C is attached to the first end 21A of the boom 21. That is, the output member 33C inputs torque about the first axis 31J to the boom 21. The boom 21 receives this torque and rotates about the first axis 31J.

As shown in Fig. 2, the second actuator 41 is disposed between the second end 21B of the boom 21 and the first end 23A of the arm 23. The configuration of the second actuator 41 is basically the same as the configuration of the first actuator 31, except for details such as dimensions, a reduction ratio, and output. Therefore, the configuration of the second actuator 41 will be briefly described below.

As shown in Fig. 3, the second actuator 41 includes a second electric motor 42 and a second speed reducer 43. The second electric motor 42 is electrically connected to the battery 19 via the second inverter 45. The housing 42A of the second electric motor 42 is attached to the second end 21B of the boom 21. An output shaft 42B of the second electric motor 42 outputs torque about the second axis 41J, which is the center axis of the drive shaft 42B. As shown in Fig. 2, the second axis 41J passes through both the second end 21B of the boom 21 and the first end 23A of the arm 23. An output member 43C of the second speed reducer 43 is attached to the first end 23A of the arm 23. As shown in Fig. 3, the output member 43C outputs torque about the second axis 41J. The arm 23 receives the torque from the output member 43C and rotates about the second axis 41J. It should be noted that the functions of a housing 43A and a reduction mechanism 43B of the second speed reducer 43 are the same as the functions of the housing 33A and the reduction mechanism 33B of the first speed reducer 33.

As shown in Fig. 2, the third actuator 51 is disposed between the second end 23B of the arm 23 and the bucket coupling wall 28 of the bucket 25. The configuration of the third actuator 51 is basically the same as the configuration of the first actuator 31, except for details such as dimensions, a reduction ratio, and output. Therefore, the configuration of the third actuator 51 will be briefly described below.

As shown in Fig. 3, the third actuator 51 includes a third electric motor 52 and a third speed reducer 53. The third electric motor 52 is electrically connected to the battery 19 via the third inverter 55. The housing 52A of the third electric motor 52 is attached to the second end 23B of the arm 23. An output shaft 52B of the third electric motor 52 outputs torque about the third axis 51J, which is the center axis of the output shaft 52B. As shown in Fig. 2, the third axis 51J passes through both the second end 23B of the arm 23 and the bucket coupling wall 28. An output member 53C of the third speed reducer 53 is attached to the bucket coupling wall 28. As shown in Fig. 3, the output member 53C outputs torque about the third axis 51J. The bucket 25 receives the torque from the output member 53C and rotates about the third axis 51J. It should be noted that the functions of a housing 53A and a reduction mechanism 53B of the third speed reducer 53 are the same as the functions of the housing 33A and the reduction mechanism 33B of the first speed reducer 33.

As shown in Fig. 3, the excavator 10 includes a swing actuator 61 and a fourth inverter 65. As shown in Fig. 1, the swing actuator 61 is accommodated in the housing front portion 14B of the upper structure 14. Although illustration is omitted, the fourth inverter 65 is accommodated in the housing main portion 14A of the upper structure 14. The configuration of the swing actuator 61 is basically the same as the configuration of the first actuator 31, except for details such as dimensions, a reduction ratio, and output. Therefore, the configuration of the swing actuator 61 will be briefly described below.

As shown in Fig. 3, the swing actuator 61 includes a fourth electric motor 62 and a fourth speed reducer 63. The fourth electric motor 62 is electrically connected to the battery 19 via the fourth inverter 65. The housing 62A of the fourth electric motor 62 is attached to the front housing portion 14B of the upper structure 14. An output shaft 62B of the fourth electric motor 62 outputs torque about swing axis 61J, which is the center axis of the output shaft 62B. An output member 63C of the fourth speed reducer 63 is attached to the first swing wall 17A of the swing bracket 17. The output member 63C outputs torque about the swing axis 61J. The swing bracket 17 receives the torque from the output member 63C and rotates about the swing axis 61J. It should be noted that the functions of a housing 63A and a reduction mechanism 63B of the fourth speed reducer 63 are the same as the functions of the housing 33A and the reduction mechanism 33B of the first speed reducer 33.

As shown in Fig. 3, the excavator 10 includes a slewing actuator 71 and a fifth inverter 75. The slewing actuator 71 and the fifth inverter 75 are housed in the housing main portion 14A of the upper structure 14. The configuration of the slewing actuator 71 is basically the same as the configuration of the first actuator 31, except for details such as dimensions, a reduction ratio, and output. Therefore, the configuration of the slewing actuator 71 will be briefly described below.

As shown in Fig. 3, the slewing actuator 71 includes a fifth electric motor 72 and a fifth speed reducer 73. The fifth electric motor 72 is electrically connected to the battery 19 via the fifth inverter 75. The housing 72A of the fifth electric motor 72 is attached to the housing main portion 14A of the upper structure 14. The output shaft 72B of the fifth electric motor 72 outputs torque about the slewing axis 10J. A plurality of teeth are formed on an output member 73C of the fifth speed reducer 73. The teeth mesh with teeth formed on the inner race 18A of the slewing bearing 18. The output member 73C outputs torque coaxial with the fifth electric motor 72. The upper structure 14 receives this torque and rotates together with a housing 72A of the fifth electric motor 72 relative to the inner race 18A and thus relative to the lower structure 13. That is, the slewing actuator 71 rotates the upper structure 14 relative to the lower structure 13. It should be noted that the functions of a housing 73A and a reduction mechanism 73B of the fifth speed reducer 73 are the same as the functions of the housing 33A and the reduction mechanism 33B of the first speed reducer 33.

### <Sensors>

As shown in Fig. 3, the excavator 10 includes a first angle sensor 38, a second angle sensor 48, a third angle sensor 58, and a fourth angle sensor 68. The first angle sensor 38 detects an angular position 38S of the first electric motor 32. More specifically, the angular position 38S of the first electric motor 32 is the angular position of the output shaft 32B of the first electric motor 32. The same applies to the angular positions of the other electric motors, and therefore the description of the output shafts of the electric motors will be omitted in the following description regarding the angular positions. The second angle sensor 48 detects an angular position 48S of the second electric motor 42. The third angle sensor 58 detects an angular position 58S of the third electric motor 52. The fourth angle sensor 68 detects an angular position 68S of the fourth electric motor 62. The angular position detected by each angle sensor indicates a value in a range from "0 degrees" to "360 degrees," with a predetermined reference position set as "0 degrees." That is, each angular position indicates an absolute angle of the respective electric motor. Each angle sensor repeatedly outputs a signal corresponding to information detected by the sensor to a processing device 100, which will be described later.

Although not illustrated, the excavator 10 includes various sensors required for operating the excavator 10 in addition to the sensors described above. For example, the excavator 10 includes sensors for detecting values of electric current flowing through the electric motors, a sensor for detecting a temperature of the battery 19, and the like.

### <Processing Device>

As shown in Fig. 3, the excavator 10 includes a processing device 100. The processing device 100 is a computer provided with processing circuit. The processing circuit includes a CPU 101 and a memory 102. The memory 102 includes three types of storage media: RAM, ROM, and electrically rewritable nonvolatile memory. In this embodiment, these three types of storage media are collectively referred to as the memory 102. The memory 102 stores in advance various control programs 102A in which processes to be executed by the CPU 101 are described. The memory 102 stores in advance various data 102B necessary for the CPU 101 to execute the control programs 102A. The processing circuit includes a communication circuit for wireless communication with an external device or unit.

### <Estimation of Backlash Amount>

As described above, the excavator 10 includes the plurality of electric motors, the plurality of speed reducers, and the plurality of driven portions operated by torque from the speed reducers. Hereinafter, the plurality of electric motors may be collectively referred to as a "motor 210" when the description is common to the plurality of electric motors and there is no need to distinguish among them. Similarly, the speed reducers and the driven portions may be collectively referred to as a "speed reducer 220" and a "driven portion 230," respectively, as necessary.

Backlash occurs in the speed reducer 220. The backlash amount of the speed reducer 220 increases due to wear or deformation of components of the speed reducer 220 such as gears, shafts, pins, and cases. In this embodiment, backlash is a delay in rotation of a rotation output portion 262 relative to rotation of a rotation input portion 261, which will be described later. The backlash amount is defined as a difference between a rotational phase of the rotation input portion 261 and a rotational phase of the rotation output portion 262, or as a period of time from when the rotation input portion 261 starts rotating until when the rotation output portion 262 starts rotating. A method by which the processing device 100 estimates the backlash amount of the speed reducer 220 in the work machine will now be described below.

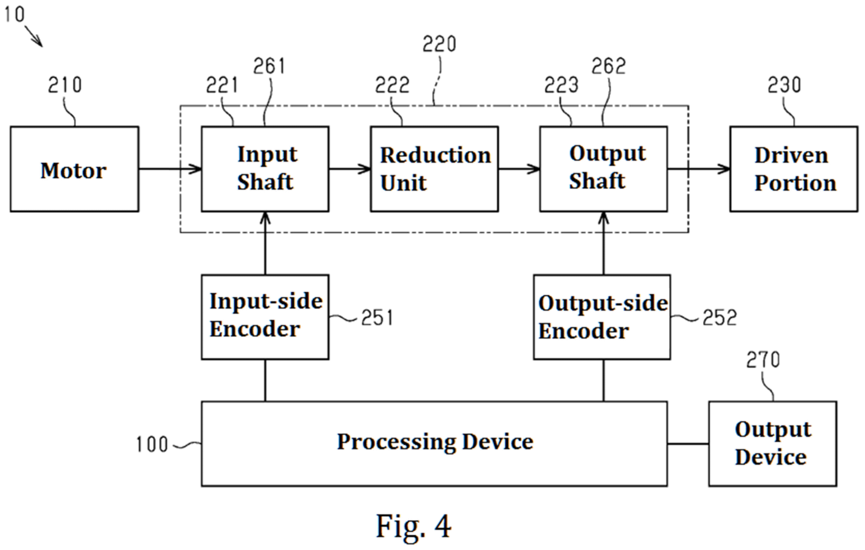

As shown in Fig. 4, the excavator 10, which is the work machine, includes the motor 210, the speed reducer 220, and the driven portion 230. As described above, the excavator 10 further includes the processing device 100.

The motor 210 outputs torque to the speed reducer 220. As shown in Fig. 3, the motor 210 is, for example, any one of the first electric motor 32, the second electric motor 42, the third electric motor 52, the fourth electric motor 62, or the fifth electric motor 72.

The torque from the motor 210 is input to the speed reducer 220. The speed reducer 220 decelerates the rotation of the torque from the motor 210. As shown in Fig. 3, the speed reducer 220 is any one of the first speed reducer 33, the second speed reducer 43, the third speed reducer 53, the fourth speed reducer 63, or the fifth speed reducer 73. When the motor 210 is the first electric motor 32, the speed reducer 220 is the first speed reducer 33. When the motor 210 is the second electric motor 42, the speed reducer 220 is the second speed reducer 43. When the motor 210 is the third electric motor 52, the speed reducer 220 is the third speed reducer 53. When the motor 210 is the fourth electric motor 62, the speed reducer 220 is the fourth speed reducer 63. When the motor 210 is the fifth electric motor 72, the speed reducer 220 is the fifth speed reducer 73.

As shown in Fig. 4, the speed reducer 220 includes an input shaft 221, a reduction unit 222, and an output shaft 223. Torque from the motor 210 is input to the input shaft 221. The torque input to the input shaft 221 is then input to the reduction unit 222. The reduction unit 222 decelerates the rotation of the torque input from the input shaft 221. The reduction unit 222 outputs the torque having the reduced rotational speed to the output shaft 223. The output shaft 223 outputs the torque of the speed reducer 220 to the driven portion 230.

As an example, when the speed reducer 220 is the first speed reducer 33, the input shaft 221 is a shaft connected to the output shaft 32B of the first electric motor 32 in the first speed reducer 33. The torque of the first electric motor 32 is input to the reduction unit 222 via the shaft serving as the input shaft 221. The shaft serving as the input shaft 221 may be a part of the reduction unit 222. When the speed reducer 220 is the first speed reducer 33, the reduction unit 222 is the reduction mechanism 33B, and the output shaft 223 is the output member 33C. Cases where the speed reducer 220 is the second speed reducer 43, the third speed reducer 53, the fourth speed reducer 63, or the fifth speed reducer 73 also follow the correspondence relationship between the speed reducer 220 and the first speed reducer 33.

The torque decelerated by the speed reducer 220 is input to the driven portion 230. The driven portion 230 is rotationally driven by the torque decelerated by the speed reducer 220. The driven portion 230 is, for example, any one of the swing bracket 17, the slewing bearing 18, the boom 21, the arm 23, or an attachment. The swing bracket 17 is rotatably coupled to the vehicle body of the work machine. The slewing bearing 18 rotatably connects the lower structure 13 and the upper structure 14 that form the vehicle body of the work machine. The boom 21 is rotatably connected to the swing bracket 17. The arm 23 is rotatably connected to the boom 21. The bucket 25 is rotatably connected to the arm 23. The attachment is a member rotatably connected to the arm 23. In this embodiment, the attachment is the bucket 25.

When the motor 210 is the first electric motor 32, the driven portion 230 is the boom 21. When the motor 210 is the second electric motor 42, the driven portion 230 is the arm 23. When the motor 210 is the third electric motor 52, the driven portion 230 is the bucket 25 which is the attachment. When the motor 210 is the fourth electric motor 62, the driven portion 230 is the swing bracket 17. When the motor 210 is the fifth electric motor 72, the driven portion 230 is the slewing bearing 18.

The work machine includes an input-side encoder 251 and an output-side encoder 252. The input-side encoder 251 acquires an input phase. The input phase is a rotational phase of the rotation input portion 261. The rotation input portion 261 is a portion that rotates based on torque input to the speed reducer 220. In the embodiment, the rotation input portion 261 is the input shaft 221 of the speed reducer 220. The input-side encoder 251 is, for example, an angle sensor. As an example, when the speed reducer 220 is the first speed reducer 33, the input-side encoder 251 acquires as the input phase, an angular position of a shaft connected to the output shaft 32B of the first electric motor 32 in the first speed reducer 33. In this case, the input-side encoder 251 may be the first angle sensor 38. The first angle sensor 38 serving as the input-side encoder 251 may acquire the angular position of the output shaft 32B of the first electric motor 32 as the input phase. The input-side encoder 251 outputs the acquired input phase to the processing device 100.

The output-side encoder 252 acquires an output phase. The output phase is a rotational phase of the rotation output portion 262. The rotation output portion 262 is a portion of the speed reducer 220 that rotates based on the torque from the rotation input portion 261. In the embodiment, the rotation output portion 262 is the output shaft 223 of the speed reducer 220. The output-side encoder 252 is, for example, an angle sensor. As an example, when the speed reducer 220 is the first speed reducer 33, the output-side encoder 252 acquires, as the output phase, an angular position of the output member 33C of the first speed reducer 33 serving as the output shaft 223. The output-side encoder 252 outputs the acquired output phase to the processing device 100.

The work machine includes an output device 270. The output device 270 outputs information related to the work machine. The information related to the work machine is, for example, information regarding the backlash of the speed reducer 220. Note that the information regarding the backlash is not limited to the backlash amount itself, and may indicate a determination result showing whether the backlash amount is within an allowable range or outside the allowable range. The output device 270 is, for example, a display that can be seen by an operator. The display serving as the output device 270 is disposed in the cabin of the excavator 10.

### <Flow of Process by Processing Device>

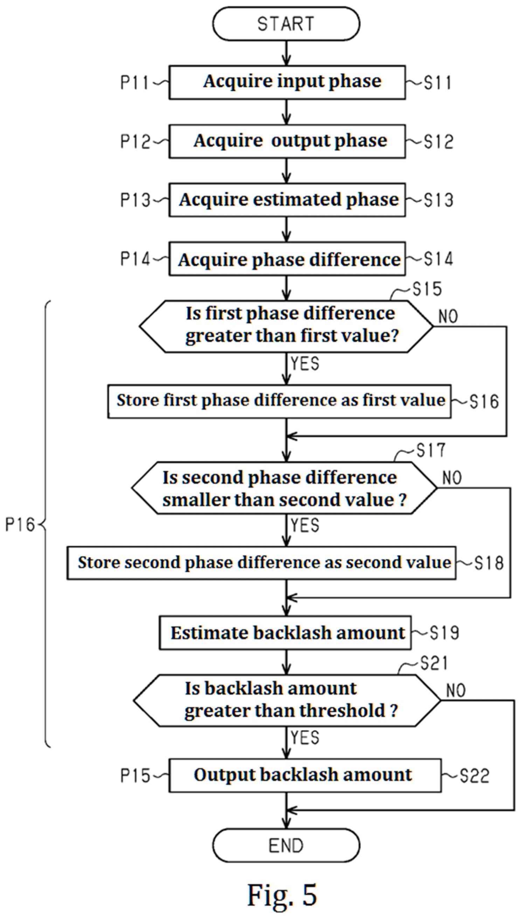

A flow of a process performed by the processing device 100 will be described with reference to Fig. 5. The process shown in Fig. 5 is executed at predetermined intervals when the driven portion 230 is driven by the torque output from the motor 210.

The processing device 100 executes a first acquisition process P11, a second acquisition process P12, a third acquisition process P13, a fourth acquisition process P14, an output process P15, and a determination process P16. That is, the processing device 100 serving as a computer executes the first acquisition process P11, the second acquisition process P12, the third acquisition process P13, the fourth acquisition process P14, the output process P15, and the determination process P16, thereby realizing a method of estimating the backlash amount. Further, in the processing device 100, the control program 102A stored in the memory 102 includes an execution program for the first acquisition process P11, the second acquisition process P12, the third acquisition process P13, the fourth acquisition process P14, the output process P15, and the determination process P16, in other words, a backlash amount estimation program.

The first acquisition process P11 is a process of acquiring the input phase. The process of step S11 corresponds to the first acquisition process P11. The processing device 100 acquires an input phase from the input-side encoder 251. For example, the processing device 100 acquires the input phase in the form of a value from 0 degrees to less than 360 degrees, representing a difference in angular position relative to a reference rotational position. The reference rotational position is defined as the state in which the rotation input portion 261 is at a predetermined rotational position. After acquiring the input phase, the processing device 100 proceeds to step S12.

The second acquisition process P12 is a process of acquiring the output phase. The process of step S12 corresponds to the second acquisition process P12. The processing device 100 acquires an output phase from the output-side encoder 252. For example, the processing device 100 acquires the output phase in the form of a value from 0 degrees to less than 360 degrees, representing a difference in angular position relative to a reference rotational position. The reference rotational position is defined as the state in which the rotation output portion 262 is at a predetermined rotational position. After acquiring the output phase, the processing device 100 proceeds to step S13.

The third acquisition process P13 is a process of acquiring an estimated phase based on the input phase and a reduction ratio. The process of step S13 corresponds to the third acquisition process P13. The reduction ratio is a ratio of the rotational speed of the rotation input portion 261 to the rotational speed of the rotation output portion 262. The reduction ratio is a value greater than zero and less than one. The reduction ratio is a value specific to each speed reducer 220. As an example, when the speed reducer 220 is the first speed reducer 33, the reduction ratio is the reduction ratio of the first speed reducer 33. The processing device 100 stores the reduction ratio between the rotation input portion 261 and the rotation output portion 262 in advance.

In the embodiment, the estimated phase acquired in the third acquisition process P13 is an estimated value of the output phase estimated based on the input phase. The processing device 100 acquires the estimated phase by calculating the estimated phase based on the input phase and the reduction ratio.

Specifically, in the third acquisition process P13, the processing device 100 acquires the estimated phase as a product of the reduction ratio and an amount of change in the input phase per unit time. The processing device 100 acquires the amount of change in the input phase per predetermined unit time based on the detection result of the input-side encoder 251. Then, based on the product of the amount of change in the input phase and the reduction ratio, the processing device 100 calculates an estimated change amount of the output phase of the rotation output portion 262 per the unit time as the estimated phase. As described above, in this embodiment, the estimated phase is calculated by setting the angular position of the rotation output portion 262 at the start of the unit time to zero and setting the angular position of the rotation output portion 262 at the end of the unit time as the estimated phase. Note that the unit time here may be a control cycle in which the series of processes shown in Fig. 5 is repeated. After acquiring the estimated phase, the processing device 100 proceeds to step S14.

The fourth acquisition process P14 is a process of acquiring a phase difference. The process of step S14 corresponds to the fourth acquisition process P14. The phase difference is a difference between the output phase and the estimated phase. In the fourth acquisition process P14, the processing device 100 acquires, as the phase difference, a difference between the amount of change in the output phase per the unit time and the estimated phase. The phase difference is calculated, for example, by subtracting the amount of change in the output phase per the unit time detected by the output-side encoder 252 from the estimated phase calculated in step S13. The difference between the output phase actually acquired from the rotation output portion 262 and the estimated phase (which is the estimated value of the output phase estimated based on the input phase) is caused by a delay in rotation of the rotation output portion 262 relative to the rotation of the rotation input portion 261.

The phase difference includes, for example, a first phase difference and a second phase difference. The first phase difference is a phase difference acquired when the motor 210 rotates in a first rotational direction. The second phase difference is a phase difference acquired when the motor 210 rotates in a second rotational direction. The second rotational direction is a rotational direction opposite to the first rotational direction. When the motor 210 rotates in the first rotational direction, the values of the input-side encoder 251 and the output-side encoder 252 increase. When the motor 210 rotates in the second rotational direction, the values of the input-side encoder 251 and the output-side encoder 252 decrease.

The absolute value of the amount of change in the output phase based on the detection value of the output-side encoder 252 tends to be smaller than the absolute value of the estimated phase due to the influence of backlash. When the motor 210 rotates in the first rotational direction, the input phase and the output phase are positive values. Therefore, when the first phase difference is calculated by subtracting the amount of change in the output phase from the estimated phase, the first phase difference is a positive value. When the motor 210 rotates in the second rotational direction, the input phase and the output phase are negative values. Therefore, when the second phase difference is calculated by subtracting the amount of change in the output phase from the estimated phase, the second phase difference is a negative value.

When the motor 210 rotates in the first rotational direction, the phase difference calculated in step S14 is the first phase difference. When the motor 210 rotates in the second rotational direction, the phase difference calculated in step S14 is the second phase difference. After acquiring the phase difference, the processing device 100 proceeds to step S15.

The determination process P16 is a process of determining whether to output the backlash amount based on the phase difference. Steps S15 through S21 correspond to the determination process P16. When the backlash amount is greater than a predetermined threshold, the processing device 100 outputs the backlash amount based on the phase difference in the output process P15. The threshold is set, for example, to a value based on which determination that outputting the backlash amount is necessary is made. An example of a case where outputting the backlash amount is necessary includes a case where the backlash amount of the speed reducer 220 has reached an amount requiring maintenance, such as inspection, servicing, or replacement for the work machine.

In step S15, the processing device 100 determines whether the first phase difference is greater than a first value. The first value is the largest first phase difference among all the first phase differences calculated in step S14 of the process of Fig. 5 executed in the past. Note that at the time of factory shipment of the work machine, a value of the first phase difference assumed based on the structure of the speed reducer 220 is preset as the first value.

When the first phase difference is greater than the first value, the processing device 100 proceeds to step S16. When the first phase difference is equal to or less than the first value, the processing device 100 skips step S16 and proceeds to step S17. If the first phase difference has not been calculated in step S14, the processing device 100 regards the first phase difference as zero. Accordingly, in this case, the processing device 100 proceeds to step S17 without executing the process of step S15. The case where the first phase difference has not been calculated is a case where the motor 210 is rotating in the second rotational direction.

In step S16, the processing device 100 stores the first phase difference calculated in S14 as a new first value. After storing the first phase difference as the first value, the processing device 100 proceeds to step S17.

In step S17, the processing device 100 determines whether a second phase difference is smaller than a second value. The second value is the smallest second phase difference among the second phase differences calculated in step S14 of the process of Fig. 5 executed in the past. At the time of factory shipment of the work machine, a value of the second phase difference assumed based on the structure of the speed reducer 220 is preset as the second value.

When the second phase difference is smaller than the second value, the processing device 100 proceeds to step S18. When the second phase difference is equal to or greater than the second value, the processing device 100 skips step S18 and proceeds to step S19. If the second phase difference has not been calculated in step S14, the processing device 100 regards the second phase difference as zero. Accordingly, in this case, the processing device 100 proceeds to step S19 without executing the process of step S17. The case where the second phase difference has not been calculated is a case where the motor 210 is rotating in the first rotational direction.

In step S18, the processing device 100 stores the second phase difference calculated in S14 as a new second value. After storing the second phase difference as the second value, the processing device 100 proceeds to step S19.

In step S19, the processing device 100 estimates a backlash amount. Specifically, the processing device 100 estimates the backlash amount based on a value obtained by subtracting the second value from the first value. The value obtained by subtracting the second value from the first value is, namely, a value obtained by subtracting the smallest second phase difference from the largest first phase difference acquired before the current the process shown in Fig. 5. Then, the processing device 100 converts the value obtained by subtracting the second value from the first value into a backlash amount by, for example, applying the value to a correspondence relationship such as a predetermined relational expression or map. The backlash amount is calculated, for example, as a distance in millimeters or micrometers.

The value obtained by subtracting the second value from the first value reflects a combined amount of the amount of wear occurring when the input shaft 221 rotates in the first rotational direction and the amount of wear occurring when the input shaft 221 rotates in the second rotational direction. This takes into account that, in the work machine, the input shaft 221 rotates in both directions with comparable frequency rather than only in one direction.

In step S21, the processing device 100 determines whether the backlash amount is greater than a threshold. When the backlash amount is greater than the threshold, the processing device 100 proceeds to step S22. When the backlash amount is equal to or less than the threshold, the processing device 100 terminates the series of processes in Fig. 5.

The output process P15 is a process for outputting the backlash amount based on the phase difference. The process of step S22 corresponds to the output process P15. For example, the processing device 100 outputs the backlash amount estimated in S19 to the output device 270. Upon receiving the backlash amount, the output device 270 displays the backlash amount. The processing device 100 causes the output device 270 to output the backlash amount by outputting a signal regarding the backlash amount to the output device 270. After outputting the backlash amount, the processing device 100 terminates the series of processes of Fig. 5.

### <Operation in First Embodiment>

According to the above configuration of the work machine, the processing device 100 estimates the backlash amount based on the output from the input-side encoder 251, the output from the output-side encoder 252, and the reduction ratio of the speed reducer 220. In this series of backlash amount estimation processes, profile data for motor characteristic of each motor 210 is not required.

### <Advantageous Effects of First Embodiment>

(1-1) The processing device 100 acquires the estimated phase based on the input phase and the reduction ratio. The processing device 100 acquires the phase difference, which is a difference between the output phase and the estimated phase. The processing device 100 outputs the backlash amount based on the phase difference. With this configuration, the processing device 100 can recognize changes in the backlash amount without requiring profile data or the like that describes the motor characteristics of the motor 210 in detail. As a result, the degree of deterioration of the speed reducer 220 or the like can be easily determined based on the backlash amount.

(1-2) The processing device 100 acquires the estimated phase as a product of the amount of change in the input phase per unit time and the reduction ratio. Further, the processing device 100 acquires the difference between the amount of change in the output phase per the unit time and the estimated phase as the phase difference. By acquiring the phase difference based on the change per the unit time in this manner, the phase difference can be easily calculated without, for example, converting the phases into absolute angular positions of the input shaft 221 and the output shaft 223.

(1-3) The processing device 100 outputs the backlash amount based on the phase difference when the backlash amount is greater than a predetermined threshold. Since the backlash amount is output when the backlash amount is greater than the predetermined threshold, an operator or an administrator of the work machine can tell that the speed reducer 220 needs maintenance or the like.

(1-4) The rotation input portion 261 is the input shaft 221 of the speed reducer 220 that inputs torque from the motor 210 to the speed reducer 220. The rotation output portion 262 is the output shaft 223 of the speed reducer 220 that outputs the torque of the speed reducer 220 to the driven portion 230. The phase difference can be acquired by acquiring the rotational phase of the input shaft 221 and the rotational phase of the output shaft 223 in the speed reducer 220. With such a configuration, sensors generally attached to the work machine can be used as the input-side encoder 251 and the output-side encoder 252, therefore, an increase in the number of components for the configuration that estimates the backlash amount can be prevented.

(1-5) The work machine includes the motor 210, the speed reducer 220, the driven portion 230, and the processing device 100. The backlash amount of the speed reducer 220 serves as an index for maintenance timing, such as inspection, servicing, or replacement of the work machine or the speed reducer 220. In work machines such as construction machines, the frequency of use and load vary significantly depending on the application, resulting in differences in service life and failure rates. The processing device 100 enables timely maintenance of the reduction gear 220 based on the amount of backlash, thereby maintaining the working machine in good condition.

(1-6) The driven portion 230 is any one of the swing bracket 17, the slewing bearing 18, the boom 21, the arm 23, or the attachment. According to this configuration, the driving state of any one of the swing bracket 17, the slewing bearing 18, the boom 21, the arm 23, or the attachment in the work machine can be maintained in a favorable state.

### <Second Embodiment>

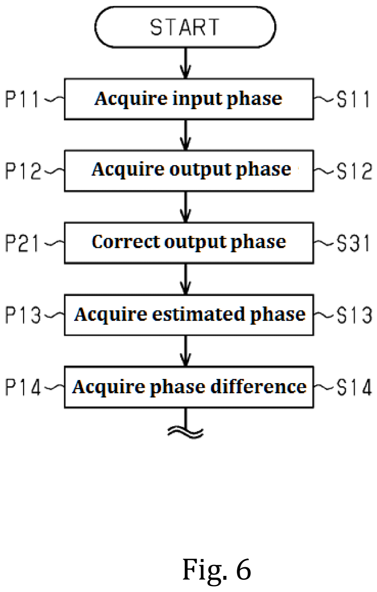

With reference to Figs. 4 and 6, describes a work machine according to a second embodiment. In the following description of the second embodiment, the same elements as in the first embodiment descriptions thereof will be omitted or simplified.

In addition to the estimation of the backlash amount in the first embodiment, the processing device 100 of this embodiment corrects the backlash amount based on a weight parameter related to the weight of the driven portion 230. The weight parameter includes the weight or the type of the driven portion 230. The weight parameter may also include a product name, a part number, or the like of the driven portion 230. The processing device 100 corrects the backlash amount such that the larger the weight of the driven portion 230, the smaller the estimated backlash amount relative to the output phase.

As shown in Fig. 6, the processing device 100 of the embodiment executes a correction process P21. The correction process P21 is a process for correcting the backlash amount that is ultimately output. The correction of the backlash amount is performed, for example, by correcting at least one of the output phase, the estimated phase, the phase difference, or the backlash amount. In this embodiment, a method for correcting the backlash value by correcting the output phase will be described.

The processing device 100 corrects the estimated phase, for example, by correcting the output phase acquired in the second acquisition process P12 to a smaller value. Here, "correcting the output phase to a smaller value" refers to correcting the absolute value of the output phase to a smaller value. Specifically, in a case where the motor 210 rotates in the first rotational direction, "correcting the output phase to a smaller value" indicates correcting the output phase, which is a positive value, to a smaller positive value. In a case where the motor 210 rotates in the second rotational direction, "correcting the output phase to a smaller value" indicates correcting the output phase, which is a negative value, to a larger negative value.

The processing device 100 corrects the output phase to a smaller value by, for example, multiplying the output phase acquired in the second acquisition process P12 by a first correction value. Thus, the estimated phase is also corrected to a smaller value. The first correction value is predetermined as a value greater than zero and less than one. The first correction value is set to a smaller value as the weight of the driven portion 230 increases. The processing device 100 stores the two or more first correction values corresponding to the weights of the driven portion 230.

By correcting the output phase to a smaller value, the phase difference, which is a value obtained by subtracting the amount of change in the output phase from the estimated phase, becomes smaller. Here, in a case where the motor 210 rotates in the first rotational direction, "the phase difference becomes smaller" indicates that the first phase difference, which is a positive value, becomes smaller. In a case where the motor 210 rotates in the second rotational direction, "the phase difference becomes smaller" indicates that the second phase difference, which is a negative value, becomes larger. As the phase difference becomes smaller, the backlash amount based on the phase difference also becomes smaller.

In this embodiment, at least a portion of the work attachment 20 of the excavator 10, serving as the work machine, is replaceable. In one example, the bucket 25 among the components of the work attachment 20 is replaceable. For the work attachment 20, for example, one bucket may be selected from a plurality of buckets 25 having different weights. As the first correction value, a correction value is set for each of the plurality of buckets 25. The processing device 100 acquires the correction value set for the bucket 25 that is currently attached as the first correction value. The weight or type of the attached bucket 25 is input as the weight parameter by an operator when the bucket 25 is replaced. The processing device 100 stores the plurality of first correction values respectively corresponding to the plurality of weight parameters.

A flow of the process performed by the processing device 100 of the embodiment will be described with reference to Fig. 6. For processes of Fig. 6, step S31 is added to the series of processes of Fig. 5. Descriptions of processes common to the processes of Fig. 5 will be omitted. Further, in Fig. 6, the illustration of step S15 and subsequent steps is omitted. In the example of Fig. 6, step S31 is added between step S12 and step S13.

In step S31, the processing device 100 corrects the output phase. The processing device 100 corrects the output phase by multiplying the output phase acquired in step S12 by the first correction value set based on the weight parameter. After correcting the output phase acquired in step S12, the processing device 100 proceeds to step S13.

### <Operation in Second Embodiment>

As the weight of the driven portion 230 increases, torsion occurs in the output shaft 223 as the driven portion 230 rotates. This torsion causes a lag in the rotation of the output shaft 223 relative to the rotation of the input shaft 221. The heavier the driven portion 230 is, the larger the output phase becomes, which in turn increases the phase difference. This may lead to an estimation of the backlash amount that is larger than the actual value. Therefore, by correcting the backlash amount based on the weight parameter of the driven portion 230, an appropriate backlash amount can be acquired.

### <Advantageous Effects of Embodiment>

According to the second embodiment, the following advantageous effects are achieved in addition to the respective effects of the first embodiment. (2-1) The processing device 100 corrects the backlash amount based on the weight parameter related to to the weight of the driven portion 230. Since the phase difference serving as the backlash amount is corrected based on the weight parameter of the driven portion 230, an appropriate backlash amount corresponding to the weight of the driven portion 230 can be acquired.

### <Modification Examples>

The above embodiment can be modified as described below. The above embodiment and the following modification examples can be implemented in combination to the extent where they are technically consistent to each other.
· The motor 210 is not limited to an electric motor and may be an air motor or a fluid motor that rotates by fluid pressure.
   · In the above-described embodiment, the rotation input portion 261 is the input shaft 221 and the rotation output portion 262 is the output shaft 223. However, the configuration is not limited thereto as long as the rotation output portion 262 is situated downstream of the rotation input portion 261 in the speed reducer 220. Alternatively, the rotation input portion 261 may be a first gear, and the rotation output portion 262 may be a second gear disposed downstream of the first gear. Alternatively, the rotation input portion 261 may be the input shaft 221, and the rotation output portion 262 may be a third gear disposed downstream of the input shaft 221. The rotation input portion 261 may be a fourth gear disposed upstream of the output shaft 223, and the rotation output portion 262 may be the output shaft 223. The first gear, the second gear, the third gear, and the fourth gear are part of the components of the speed reducer 220.
· In the embodiment, the processing device 100 is described as a computer provided in the excavator 10. However, the processing device 100 may be a maintenance computer connected to the excavator 10 when performing maintenance on the excavator 10.
· In the third acquisition process P13, the processing device 100 may acquire the estimated phase based on the output phase and the reduction ratio. In the third acquisition process P13, the processing device 100 acquires the estimated phase as a value obtained by dividing the output phase by the reduction ratio. In the fourth acquisition process P14, the processing device 100 acquires the phase difference as a difference between the input phase and the estimated phase.
· The determination process P16 may be omitted. In this modification example, in the series of processes of Fig. 5, after the phase difference is acquired in step S14, a backlash amount based on the phase difference may be output in step S22. The calculation of the backlash amount follows the example of step S19.
· In the fourth acquisition process P14, the processing device 100 may calculate the backlash amount from only one of the first value or the second value.
   · The backlash amount output in the output process P15 may be an index indicating the backlash amount. Examples of the index indicating the backlash amount include a value indicating the magnitude of the backlash amount in stages and a reminder message. For the value indicating the magnitude of the backlash amount in stages, for example, a first value indicating that the backlash amount is small, a second value indicating that the backlash amount is large, or the like is set. The reminder message is a message indicating an increase in the backlash amount to an operator for maintenance of the speed reducer 220.
· In the second embodiment, the processing device 100 may acquire the weight of the bucket 25 based on a motor current of the motor 210 when a first operation is executed while the bucket 25 is attached. The processing device 100 stores a first motor current when the first operation is executed while the first bucket 25 is attached. The processing device 100 acquires a second motor current when the first operation is executed while a second bucket 25 is attached. When the second bucket 25 is heavier than the first bucket 25, the second motor current is larger than the first motor current. The processing device 100 acquires the weight of the second bucket 25 as a weight parameter based on a difference between the first motor current and the second motor current.
   In the second embodiment, the processing device 100 may correct the backlash amount to a smaller value by correcting the estimated phase to a smaller value. For example, the processing device 100 corrects the phase difference to a smaller value by multiplying the estimated phase acquired in the third acquisition process P13 by a second correction value. The second correction value is a value greater than zero and less than one. The second correction value is set to a smaller value as the weight of the driven portion 230 increases. The processing device 100 stores a plurality of the second correction values corresponding respectively to a plurality of the weight parameters.
· In the second embodiment, the processing device 100 may correct the backlash amount to a smaller value by correcting the phase difference to a smaller value. For example, the processing device 100 corrects the phase difference to a smaller value by multiplying the phase difference acquired in the fourth acquisition process P14 by a third correction value. The third correction value is a value greater than zero and less than one. The third correction value is set to a smaller value as the weight of the driven portion 230 increases. The processing device 100 stores a plurality of the third correction values corresponding respectively to the plurality of weight parameters.
· In the second embodiment, the processing device 100 may correct the backlash amount to a smaller value by multiplying the backlash amount estimated in the determination process P16 by a fourth correction value. The fourth correction value is a value greater than zero and less than one. The fourth correction value is set to a smaller value as the weight of the driven portion 230 increases. The processing device 100 stores a plurality of the fourth correction values corresponding respectively to the plurality of weight parameters.
· A torsion occurring in the speed reducer 220 may be estimated based on the phase difference. The processing device 100 determines that the torsion amount occurring in the speed reducer 220 is larger as the phase difference is larger. For example, when the work machine is an excavator, an external torque may be estimated from the torsion amount. The excavator first receives an excavation reaction force by a brake. The excavator releases the brake before the external torque exceeds an allowable brake torque, and receives the excavation reaction force by a motor torque.
· In the second embodiment, the correction of the output phase may be performed by subtracting a correction value from the output phase.
   · According to the foregoing embodiments, a plurality of functions are distributively provided. Some or all of the functions may be integrated. Any one of the functions may be partly or entirely segmented into a plurality of functions, which are distributively provided. Irrespective of whether the functions are integrated or distributed, they are acceptable as long as they are configured to attain the object of the invention.

### <Configuration Example 1 of Work Machine>

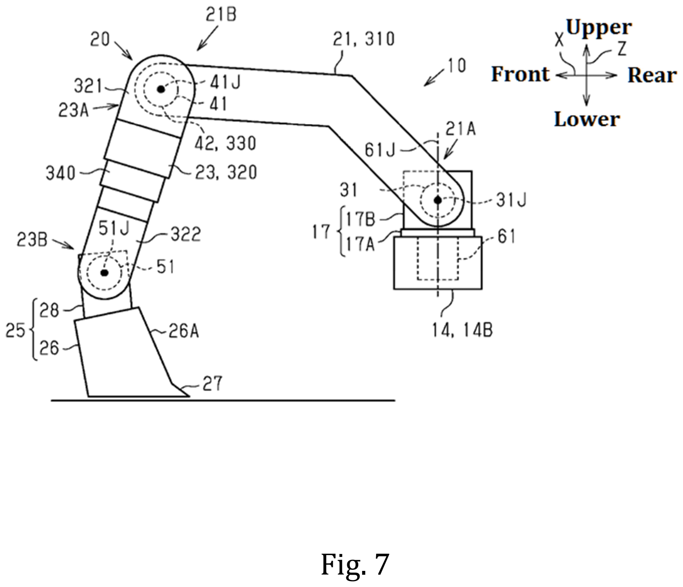

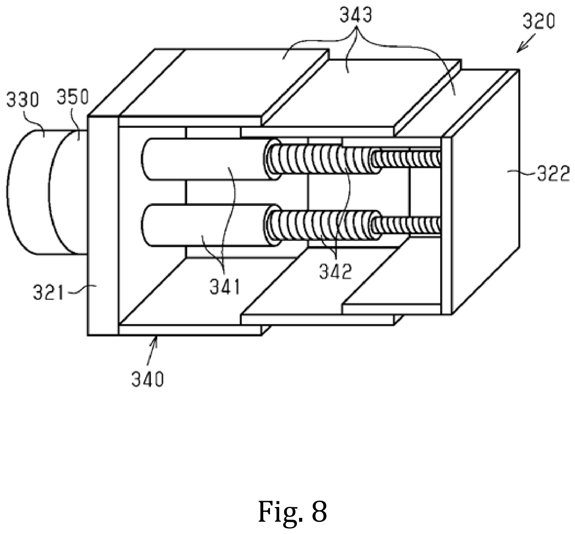

The work machine in each of the above-described embodiments may be configured as shown in Figs. 7 and 8. In the configuration example, the configuration of the arm 23 as a first member 310, which will be described later, differs from that in each of the embodiments. Note that Fig. 7 illustrates only a part of the excavator 10, which is a portion of the upper structure disposed closer to the arm 23 than the housing front portion 14B, and other portions are omitted.

Japanese Patent Application Publication No. 2008-202364 ("the '364 Publication") discloses a hydraulic excavator. This hydraulic excavator includes a boom extending from an upper slewing body, an arm extending from the boom, and a bucket attached to the arm.

In a hydraulic excavator such as the one disclosed in Japanese Patent Application Publication No. 2008-202364, making the lengths of members such as the boom and the arm variable provides advantages such as expansion of a working range and compactness during storage. For this reason, some work machines employ hydraulic cylinders to make the lengths of members such as the boom and the arm variable. Since the hydraulic cylinder is fixed to the members such as the boom and arm, it is difficult to retract the members, such as the boom 21 and the arm 23, to be shorter than the length of the hydraulic cylinder. Thus, a telescopic structure employing the hydraulic cylinder has limited expansion and contraction ranges.

In this configuration example, the length of members such as the boom 21 and the arm 23 is made variable by using the rotational motion of an electric motor 330 as linear motion. This overcomes the constraint that it is difficult to make members such as the boom 21 and the arm 23 shorter than the length of the hydraulic cylinder.

As shown in Fig. 7, the work machine of this modification example includes a first member 310, a second member 320, the electric motor 330, and a conversion mechanism 340. The first member 310 is coupled to the vehicle body of the work machine. The first member 310 is one selected from the boom 21, the arm 23, or the bucket 25. In this configuration example, the first member 310 is the boom 21 coupled to the vehicle body of the excavator 10 via the swing bracket 17.

The second member 320 is rotatably coupled to the first member 310. The second member 320 is one of the boom 21, the arm 23, or the bucket 25 that is different from the first member 310. In this configuration example, the second member 320 is the arm 23.

The electric motor 330 is a power source for relative rotation between the first member 310 and the second member 320. The electric motor 330 is one selected from the first electric motor 32, the second electric motor 42, and the third electric motor 52. In this configuration example, the electric motor 330 is the second electric motor 42 that rotates the arm 23, which is the second member 320, about the second axis 41J relative to the boom 21, which is the first member 310.

In the example of Fig. 7, the conversion mechanism 340 is provided in the second member 320, which is the arm 23. The conversion mechanism 340 converts the rotational motion output by the electric motor 330 into linear motion and outputs the linear motion. In this embodiment, the second member 320, which is the arm 23, is expandable and contractible by the linear motion output from the conversion mechanism 340. The second member 320, which is the arm 23, being expandable and contractible means that a distance from the first end 23A to the second end 23B of the arm 23 increases or decreases. The conversion mechanism 340 may be provided in the first member 310, which is the boom 21. In addition, the first member 310, which is the boom 21, may be expandable and contractible by the linear motion output from the conversion mechanism 340.

Fig. 8 schematically illustrates a structure around the conversion mechanism 340 in the second member 320. The work machine includes a switching gear device 350. The switching gear device 350 is capable of connecting the electric motor 330 and the conversion mechanism 340. The switching gear device 350 is capable of switching a transmission state of the rotational motion of the electric motor 330 between a first transmission state and a second transmission state. In the first transmission state, the switching gear device 350 connects the electric motor 330 and the conversion mechanism 340. In the first transmission state, the switching gear device 350 transmits the rotational motion of the electric motor 330 to the conversion mechanism 340. In the second transmission state, the switching gear device 350 connects the electric motor 330 and the second member 320. In the second transmission state, the switching gear device 350 causes the second member 320 to rotate relative to the first member 310 by the rotational motion of the electric motor 330.

The switching gear device 350 is configured as a speed reducer. The switching gear device 350 includes, for example, the second speed reducer 43 that transmits the rotational motion of the second electric motor 42, serving as the electric motor 330, to the boom 21.

As shown in Fig. 7, the second member 320 includes a first portion 321 and a second portion 322. The first portion 321 includes a first end 21A of the second member 320 in a longitudinal direction of the second member 320. The second portion 322 includes a second end 21B of the second member 320 in the longitudinal direction of the second member 320.

In the example of Fig. 8, a side surface of the second member 320 is omitted to illustrate the inside of the second member 320. As shown in Fig. 8, the conversion mechanism 340 includes, for example, an electric cylinder 341. The electric cylinder 341 is arranged along the longitudinal direction of the second member 320. One end of the electric cylinder 341 is connected to the first portion 321, and the other end of the electric cylinder 341 is connected to the second portion 322. As the electric cylinder 341 extends and contracts, the second portion 322 moves in the longitudinal direction of the second member 320 relative to the first portion 321. The second member 320 extends and contracts as the second portion 322 moves relative to the first portion 321.

The electric cylinder 341 includes a ball screw 342. The ball screw 342 extends and contracts by the rotational motion output by the electric motor 330. The electric cylinder 341 extends and contracts by the expansion and contraction of the ball screw 342. The linear motion output by the conversion mechanism 340 is the extension and contraction of the electric cylinder 341. In Fig. 8, two multi-stage ball screws 342 are used.

The conversion mechanism 340 may extend and contract by a structure other than the electric cylinder 341 having the ball screw 342. Other examples of the conversion mechanism 340 include a pantograph structure and a rack-and-pinion structure.

The conversion mechanism 340 includes a case 343. The case 343 provides outer surfaces of the second member 320. The case 343 connects the first portion 321 and the second portion 322 of the second member 320. The case 343 has a box shape. The conversion mechanism 340 is disposed in an internal space of the exterior 343. The exterior 343 has a telescopic structure. The telescopic structure can prevent dust from entering into the interior of the case 343. When the conversion mechanism 340 is resistant to dust and has sufficient rigidity, the exterior 343 may be omitted.

The second member 320 may include a communication device. The communication device is a wireless communication device. The communication device receives, for example, a first signal for extending the second member 320 or a second signal for retracting the second member 320. Based on the received first signal or second signal, the second member 320 switches the transmission state of the switching gear device 350 to the first transmission state and causes the electric motor 330 to output torque. Thus, the conversion mechanism 340 is driven, whereby the second member 320 extends and contracts. By extending and contracting the second member 320 via the communication device, there is no need to extend a communication line from the second member 320, which simplifies the electrical configuration of the work machine.

### <Configuration Example 2 of Work Machine>

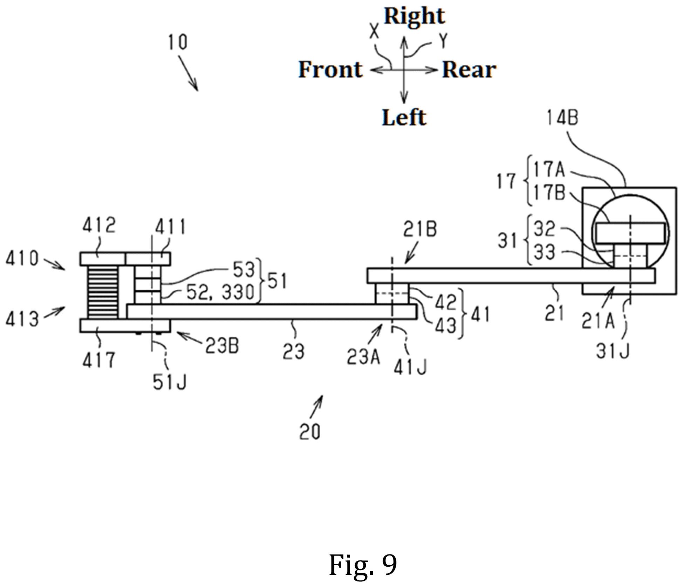

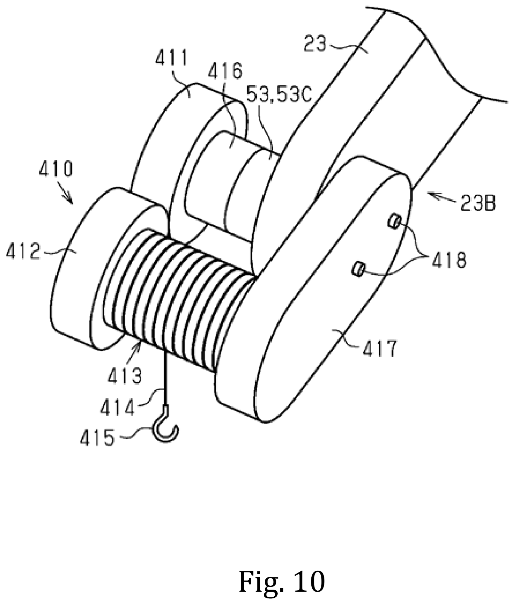

As shown in Figs. 9 and 10, in this configuration example, in the excavator 10 which is a construction machine, a winch mechanism 410 is provided in the vicinity of the second end 23B of the arm 23 instead of the bucket 25. Note that Fig. 9 illustrates only a part of the excavator 10, which is a portion of the upper structure disposed closer to the arm 23 than the housing front portion 14B, and other portions are omitted.

Japanese Patent Application Publication No. 2014-213994 discloses a crane. This crane includes a slewing body, a boom extending from the slewing body, and a hoisting drum. Further, the crane includes a crane wire attached to the boom and a crane hook attached to the crane wire. At a work site, a heavy object may be moved by a crane; however, there are cases where a crane cannot be installed at a narrow work site.

In this configuration example, a crane function is added to the excavator 10 by attaching the winch mechanism 410 to the excavator 10. This allows heavy objects to be moved by the excavator 10 at a narrow work site where a crane cannot be installed.

As shown in Fig. 9, the construction machine includes the boom 21, the arm 23, the electric motor 330, and the winch mechanism 410. The boom 21 is coupled to the vehicle body. The arm 23 is rotatably coupled to the boom 21. The electric motor 330 is attached to the arm 23. The electric motor 330 of this configuration example is, for example, the third electric motor 52.

The winch mechanism 410 shown in Fig. 10 is attached to the output shaft of the electric motor 330, and is capable of winding up or paying out a wire 414 in accordance with rotation of the output shaft of the electric motor 330. The output shaft of the third electric motor 52 serving as the electric motor 330 is, for example, the output member 53C of the third speed reducer 53 that rotates by torque of the third electric motor 52 shown in Fig. 3.

The winch mechanism 410 includes a first pulley 411, a second pulley 412, a drum 413, and the wire 414. The first pulley 411 is attached to the output shaft of the electric motor 330. A rotation shaft of the first pulley 411 is attached to the output shaft of the electric motor 330 via a coupling 416. The first pulley 411 rotates integrally with the output shaft of the electric motor 330. The second pulley 412 meshes with the first pulley 411. The second pulley 412 rotates integrally with the drum 413. The wire 414 is wound around the drum 413. For example, a hook 415 is attached to an end of the wire 414. The drum 413 is supported by a support member 417 at the second end 23B of the arm 23. The support member 417 is fixed to the arm 23 by a fixing member 418 such as a screw or a bolt. The second pulley 412 is formed integrally with the drum 413.

The rotation of the output shaft of the electric motor 330 is transmitted to the drum 413 via the first pulley 411 and the second pulley 412. As the drum 413 rotates, the wire 414 is wound up or the wire 414 is paid out.

The winch mechanism 410 is attachable to and detachable from the output shaft of the electric motor 330. By removing the coupling 416 from the output shaft of the electric motor 330, the first pulley 411 is removed from the output shaft of the electric motor 330. By loosening the fixing member 418, the support member 417 is removed from the arm 23. The second pulley 412 and the drum 413 are removed from the arm 23 together with the support member 417.

When the winch mechanism 410 is removed from the output shaft of the electric motor 330, the bucket 25 is attached to the output shaft of the electric motor 330 instead of the winch mechanism 410. Since the winch mechanism 410 uses the torque of the electric motor 330, which is the power source for the bucket 25, as its power source, it is not necessary to add a power source other than the electric motor 330.

The technical ideas disclosed in this specification are as follows.

### [Additional Embodiment 1]

A work machine, including: a first member coupled to a vehicle body; a second member rotatably coupled to the first member; an electric motor serving as a power source for relative rotation between the first member and the second member; and a conversion mechanism converting rotational motion output by the electric motor into linear motion and outputting the linear motion, wherein at least one of the first member or the second member is extendable and retractable by the linear motion output from the conversion mechanism.

### [Additional Embodiment 2]

A construction machine comprising: a boom coupled to a vehicle body; an arm rotatably coupled to the boom; an electric motor attached to the arm; and a winch mechanism attached to an output shaft of the electric motor, the winch mechanism being configured to wind up or pay out a wire in accordance with rotation of the output shaft, wherein the winch mechanism is detachably coupled to the output shaft.

## Claims

1. A processing device configured to execute:
a first acquisition process of acquiring an input phase, the input phase being a rotational phase of a rotation input portion of a speed reducer, the rotation input portion rotating based on torque input to the speed reducer;
a second acquisition process of acquiring an output phase, the output phase being a rotational phase of a rotation output portion of the speed reducer, the output portion rotating based on torque from the rotation input portion;
a third acquisition process of acquiring an estimated phase based on a reduction ratio and either one of the input phase or the output phase, the reduction ratio being a ratio of a rotational speed of the rotation input portion to a rotational speed of the rotation output portion;
a fourth acquisition process of acquiring a phase difference, the phase difference being a difference between the other of the input phase or the output phase and the estimated phase; and
an output process of outputting a backlash amount based on the phase difference.

2. The processing device of claim 1, wherein, in the third acquisition process, the estimated phase is acquired as a product of an amount of change in the input phase per unit time and the reduction ratio, and
wherein, in the fourth acquisition process, the phase difference is acquired as a difference between an amount of change in the output phase per the unit time and the estimated phase.

3. The processing device of claim 1 or 2, wherein, in the output process, the backlash amount based on the phase difference is output when the backlash amount is greater than a predetermined threshold.

4. The processing device of claim 1 to 3, wherein, the rotation input portion is an input shaft of the speed reducer to which torque from a motor is input; and
wherein the rotation output portion is an output shaft of the speed reducer that outputs torque of the speed reducer to a driven portion.

5. The processing device of claim 4, wherein the processing device corrects the backlash amount based on a weight parameter related to weight of the driven portion.

6. A work machine, comprising:
a motor;
a speed reducer to which torque from the motor is input;
a driven portion to which torque decelerated by the speed reducer is input; and
the processing device of claim 1 to 5.

7. The work machine of claim 6, wherein the driven portion is any one of: a slewing bearing rotatably coupling a lower structure and an upper structure that form a vehicle body of the work machine; a swing bracket rotatably coupled to the vehicle body; a boom rotatably coupled to the swing bracket; an arm rotatably coupled to the boom; or an attachment rotatably coupled to the arm.

8. A method of estimating a backlash amount, comprising:
acquiring, by a computer, an input phase, the input phase being a rotational phase of a rotation input portion of a speed reducer, the rotation input portion rotating based on torque input to the speed reducer;
acquiring, by the computer, an output phase, the output phase being a rotational phase of a rotation output portion of the speed reducer, the output portion rotating based on torque from the rotation input portion;
acquiring, by the computer, an estimated phase based on a reduction ratio and either one of the input phase or the output phase, the reduction ratio being a ratio of a rotational speed of the rotation input portion to a rotational speed of the rotation output portion;
acquiring, by the computer, a phase difference, the phase difference being a difference between the other of the input phase or the output phase and the estimated phase; and
outputting, by the computer, a backlash amount based on the phase difference.

9. A program for estimating a backlash amount, the program causing a computer to execute:
a first step of acquiring an input phase, the input phase being a rotational phase of a rotation input portion of a speed reducer, the rotation input portion rotating based on torque input to the speed reducer;
a second step of acquiring an output phase, the output phase being a rotational phase of a rotation output portion of the speed reducer, the output portion rotating based on torque from the rotation input portion;
a third step of acquiring an estimated phase based on a reduction ratio and either one of the input phase or the output phase, the reduction ratio being a ratio of a rotational speed of the rotation input portion to a rotational speed of the rotation output portion;
a fourth step of acquiring a phase difference, the phase difference being a difference between the other of the input phase or the output phase and the estimated phase; and
a fifth step of outputting a backlash amount based on the phase difference.
